# EUROPÄISCHE PATENTSCHRIFT

(11) **EP 3 131 825 B1**
(45) Veröffentlichungstag und Bekanntmachung des Hinweises auf die Patenterteilung: **24.02.2021**
(21) Anmeldenummer: 15713333.1
(22) Anmeldetag: 31.03.2015
(51) Int. Cl.: B65D 33/01, B32B 5/02, B32B 5/26, B32B 7/12, B32B 27/12, B32B 27/32, B32B 27/10, B29C 65/00, B32B 1/08, B32B 3/06, B65D 75/40, B29C 65/40, B29C 65/48, B29C 65/50, B29C 65/52, B32B 3/26

(54) **PACKMITTEL SOWIE VERFAHREN UND VORRICHTUNG ZUR HERSTELLUNG EINES PACKMITTELS**
PACKAGING MEANS AS WELL AS METHOD AND DEVICE FOR PRODUCING A PACKAGING MEANS
MOYEN D'EMBALLAGE ET PROCÉDÉ ET DISPOSITIF DE FABRICATION D'UN MOYEN D'EMBALLAGE

(30) Priorität: 08.04.2014 DE 102014206792
(43) Veröffentlichungstag der Anmeldung: 22.02.2017
(73) Patentinhaber: Windmöller & Hölscher KG, 49525 Lengerich (DE)
(72) Erfinder: VUTZ, Jürgen, 48268 Greven (DE); KÖHN, Uwe, 49078 Osnabrück (DE); HAWIGHORST, Thomas, 49205 Hasbergen (DE); HERSCHBACH, Christof, 48157 Münster (DE); SCHNEIDER, Bernd, 49084 Osnabrück (DE)
(86) Internationale Anmeldenummer: PCT/EP2015/056974
(87) Internationale Veröffentlichungsnummer: WO 2015/155056

(56) Entgegenhaltungen:
- EP-A1- 0 338 479
- DE-A1-102009 036 556
- DE-U1-202005 003 539
- GB-A- 945 879
- NZ-A- 525 778
- US-A- 3 195 801
- US-A- 6 150 005
- US-A1- 2001 021 281
- US-A1- 2004 009 732
- US-A1- 2004 077 248
- US-A1- 2006 194 004
- US-B1- 6 265 002

## Beschreibung

Die Erfindung betrifft ein Packmittel nach dem Oberbegriff des Anspruchs 1, sowie ein Verfahren zur Herstellung eines solchen Packmittels nach dem Oberbegriff des Anspruchs 10.

Zum Zweck des Schutzes der Umgebung oder des Packgutes, der Portionierung, der Lagerung, des Transports der physischen Manipulation sowie der Vermarktung ist es häufig vorgesehen, ein Packgut mit einer Verpackung zu umhüllen, wobei dies auch bedeuten kann, dass das Packgut in die Verpackung gegeben wird.

Eine Verpackung umfasst häufig einen Packstoff, der das Grundmaterial, also den Werkstoff, einer Verpackung darstellt. Aus diesem Packstoff wird das Packmittel hergestellt. Zu dessen Herstellung werden oft noch Packhilfsmittel wie etwa Klebstoffe benötigt.

Als Packstoff werden seit langer Zeit sehr oft synthetische Werkstoffe verwendet. Insbesondere Kunststoffe finden Verwendung in Form von Folien, verwebte Kunststoffbändchen oder als Vliese.

Der das letztgenannte Material umfassende Packstoff ist der Ausgangspunkt für ein Packmittel gemäß der vorliegenden Erfindung.

Ein Vlies beziehungsweise Vliesstoff ist dabei ein Gebilde aus Fasern mit begrenzter Länge und/oder Endlosfasern jeglicher Art und jeglichen Ursprungs, die auf irgendeine Weise zu einem Vlies zusammengefügt und miteinander verbunden sind. Ein Vlies ist dabei ein flächiges Gebilde, d. h. die Länge und die Breite sind sehr groß im Vergleich zu dessen Dicke.

Aus der WO 2011/018318 ist bereits ein Packstoff bekannt, welcher als erste Schicht einen Vliesstoff umfasst, und welcher eine zweite Schicht umfasst. Als zweite Schicht ist in diesem Fall eine Kunststoffbahn vorgesehen. Dabei stellt das Vlies eine hohe Tragfestigkeit zur Verfügung, d.h. es kann stark belastet werden. Die Kunststoffbahn dient unter anderem als Feuchtigkeitsbarriere.

Die genannte Druckschrift schlägt weiterhin vor, aus diesem Packstoff ein sackförmiges Packmittel, insbesondere einen Ventilsack zu schaffen. Die Kunststoffbahn ist außen, also nicht dem Sackinneren zugewandt, angeordnet, um bei der vorgeschlagenen Bildung eines mit einem Deckblatt belegten Kreuzbodens eine Heißluftschweißung zu ermöglichen.

Es hat sich jedoch in der Praxis herausgestellt, dass das benötigte Vlies ein Flächengewicht von über 80 g/qm (Gramm pro Quadratmeter) haben muss, um eine ausreichende Festigkeit bereitzustellen. Diese Festigkeit wird benötigt, um einen Ventilsack zum Abfüllen und Transportieren von Baustoffen, insbesondere Zement, zu schaffen, wobei pro Packmittel in der Regel 15 bis 50kg abgefüllt sind.

Ein Vlies mit einer derartig hohen Festigkeit ist allerdings teuer.

Es besteht daher der Wunsch nach einem Packmittel, das eine ausreichende Festigkeit bereitstellt, jedoch günstiger herzustellen beziehungsweise zu beschaffen ist.

Erfindungsgemäß wird diese Aufgabe durch die Merkmale der Ansprüche 1 und 10

Es gibt zahlreiche faserhaltige Materialien, die eine gewisse Festigkeit zur Verfügung stellen. Zu deren Herstellung werden in der Regel Fasern erzeugt, die oft in unregelmäßiger Ausrichtung auf eine Unterlage abgelegt und auf geeignete Weise untereinander verbunden werden. Hierzu können, je nach Material der Fasern und, falls benötigt, der Haftvermittler Presswalzen und/oder Trockeneinrichtungen dienen. Faserhaltige Materialien sind oft sehr preisgünstig erhältlich, da der Herstellungsaufwand gering ist.

Bei Vliesstoffen, die im englischen Sprachgebrauch auch als "nonwoven" bezeichnet werden, hat sich hingegen gezeigt, dass diese sich teilweise besser verarbeiten lassen, aber eben bei geeigneter Festigkeit hohe Kosten verursachen, da zu dessen Herstellung speziell entwickelte Verfahren und Vorrichtungen nötig sind. Die vorliegende Erfindung macht sich daher zunutze, dass sich Vliesstoffe mit einer deutlich geringeren Festigkeit als der eingangs genannte Vliesstoff mit einem Flächengewicht von 80 g/qm deutlich einfacher und damit preisgünstiger herstellen lassen. So kann der Vliesstoff ein Flächengewicht von 10 bis 100 g/qm, bevorzugt 15 bis 60 g/qm, insbesondere von 20 bis 50 g/qm aufweisen. Das faserhaltige Material beziehungsweise die hieraus gebildete Bahn kann vergleichbare Flächengewichte aufweisen. Hier ist ein Flächengewicht von 10 bis 100 g/qm, bevorzugt 30 bis 70 g/qm und insbesondere 40 bis 60 g/qm vorteilhaft.

Bringt man nun beide vorgenannten Materialien, also einen Vliesstoff und eine Bahn aus faserhaltigem Material zusammen, so liefert jede von ihnen einen Beitrag zur Festigkeit des Packstoffes, so dass insbesondere für die Anwendung des daraus gebildeten Packmittels im Bereich des Baustofftransport eine ausreichende Festigkeit zur Verfügung gestellt ist. So Vorteilhaft ist es etwa, wenn beide Schichten einen vergleichbaren Anteil an der Festigkeit des Packstoffes haben.

Bei den Vliesstoffen wird bevorzugt auf solche Vliesstoffe zurückgegriffen, deren Fasern Chemiefasern umfassen. In weiterer Ausgestaltung des erfindungsgemäßen Packstoffs sind Chemiefasern aus synthetischen Polymeren vorgesehen. Auch hier werden polyolefinische Grundprodukte bevorzugt, so dass der erfindungsgemäße Packstoff vorteilhafterweise einen polypropylen- oder einen polyethylenhaltigen Vliesstoff umfasst. Selbstverständlich sind hier auch andere synthetische Polymere einsetzbar, so dass die vorgenannte Konkretisierung keinesfalls als Beschränkung des erfinderischen Gedankens zu verstehen ist.

Es können Vliesstoffe, deren Fasern direkt aus durch Düsen hindurchtretende Polymerschmelzen ersponnen und mittels heißer Luftströme bis zum Zerreißen gestreckt werden (Meltblown-Verfahren). Hierbei können Endlosfaser und/oder längere Spinnfasern bilden. Alternativ ist ein Vliesstoff vorgesehen, bei dem die Polymerschmelze ebenfalls aus einer Düse austritt, aber mittels kalter Luft verstreckt wird (Spunbond-Verfahren). In beiden Verfahren werden die abgelegten Fasern mittels Walzen verpresst, so dass eine feste Verbindung der Fasern untereinander besteht.

Die faserhaltige Materialien sind Papier oder ein weiterer Vliesstoff.

Unter Papier ist hierbei ein flächiger Werkstoff, der im Wesentlichen aus Fasern meist pflanzlicher Herkunft besteht und durch Entwässerung einer Faseraufschwemmung auf einem Sieb, durch Verdichtung sowie durch Trocknung gebildet wird. Papier kann zur Steigerung der Festigkeit des Packstoffes herangezogen werden. Dies gilt insbesondere, wenn Kraftpapier, bei dem die Fasern zu einem überwiegenden Teil (> 90%) aus Zellstofffasern bestehen, vorgesehen ist.

Ebenfalls vorteilhaft ist das Vorsehen eines Vliesstoffes als zweite Schicht. Der Vliesstoff kann ebenfalls der Erhöhung der Gesamtfestigkeit dienen. Der Vliesstoff kann in der gleichen Ausgestaltung vorliegen wie der Vliesstoff der ersten Schicht.

Bei dem Vorsehen eines Packstoffes, bei der sowohl die erste als auch die zweite Schicht ein Vliesstoff umfassen, ist jedoch nicht gemeint, dass einer der beiden Vliesstoffe bereits ein mehrschichtiges Gebilde sein kann. So ist es nicht unüblich, einen Vliesstoff nicht als einzelne Schicht herzustellen, sondern bereits als mehrschichtiges Flächengebilde, bei welchem beispielsweise auf unterschiedliche Arten hergestellte Vliese zusammengebracht sind. Bei der vorliegenden Erfindung ist zur Abgrenzung davon vorgesehen, beide Schichten mittels eines Verbindungsstoffes zusammen zu bringen. Weitere Details hierzu sind dieser Offenbarung weiter unten zu entnehmen. Bei der in diesem Abschnitt offenbarten Ausführungsform der Erfindung ist es vorteilhaft, wenn diese jeweils im Wesentlichen Polypropylen umfassen. Diese Kombination bietet den großen Vorteil, dass es als sortenreines Gebilde sehr gut zu recyceln ist, insbesondere, wenn das Verbindungsmittel ebenfalls auf Polypropylen basiert.

Das Flächengewicht der zweiten Schicht kann zwischen 10g/qm und 150 g/qm, insbesondere zwischen 20 g/qm und 50 g/qm betragen.

Beide Schichten sind dauerhaft miteinander verbunden, wofür ein Verbindungsstoff oder ein Verbindungsmittel vorgesehen ist. Dieses Verbindungsmittel ist vorteilhafterweise ebenfalls ein Polyolefin, insbesondere Polypropylen, das punktuell, großflächig oder sogar vollflächig den Vliesstoff mit der Folienbahn verbindet.

Zur Herstellung eines solchen Packstoffs ist es vorteilhaft, das Verbindungsmittel in schmelzeförmigen Zustand auf den Vliesstoff und/oder auf die das faserhaltige Material umfassende Bahn aufzutragen und beide Komponenten miteinander so in Kontakt zu bringen, dass das Verbindungsmittel ausschließlich zwischen ihnen angeordnet ist.

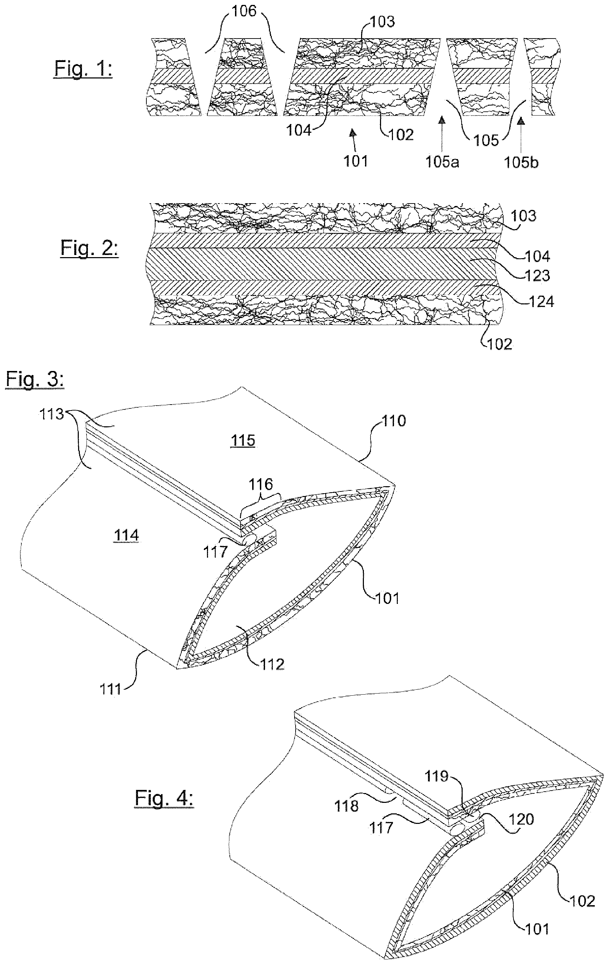

Das Verbindungsmittel hat dabei nicht nur die Funktion, beide Schichten miteinander zu verbinden, sondern auch gleichzeitig eine Feuchtigkeitsbarriere darzustellen. Insbesondere Vliesstoffe sind häufig feuchtigkeitsdurchlässig, so dass unbehandelter Vliesstoff vor allem zur Verpackung von Baustoffen in der Regel ungeeignet ist. Der Packstoff ist mit Entlüftungsöffnungen versehen, wie es im Zusammenhang mit der Figur 1 beschrieben wird. Hierdurch kann die beim Füllprozess in das Packmittel eintretende Luft wieder entweichen.

Das Verbindungsmittel kann mit einem Flächengewicht von 5 bis 30 g/qm vorgesehen werden, so dass letztendlich der Packstoff ein Flächengewicht von 25 bis 230 g/qm aufweisen kann.

In weitere Ausgestaltung der Erfindung kann zwischen der ersten und der zweiten Schicht eine dritte Schicht vorgesehen sein. Vorteilhaft ist hier eine Kunststofffolienbahn, die ungereckt oder gereckt sein kann. Eine Kunststofffolienbahn stellt eine weitere beziehungsweise eine verbesserte Feuchtigkeitsbarriere dar. Sie kann jeweils mit einem Verbindungsmittel an der ersten und an der zweiten Schicht befestigt sein und perforiert sein. Der nun dreischichtigen Packstoff wird nach dessen Herstellung perforiert.

Besondere Vorteile ergeben sich bei der Ausgestaltung des Packmittels als sackförmiges Packmittel, worauf im Folgenden näher eingegangen wird.

In einer vorteilhaften Weiterbildung des Packmittels umfasst dieses eine Längsnaht, die daraus gebildet ist, dass zwei Randbereiche des Packstoffes übereinander gelegt und miteinander verbunden sind. Vorteilhafterweise sind die Grenzen dieser Randbereiche, also deren Ränder, parallel zueinander angeordnet. Die Randbereiche sind erfindungsgemäß mit zumindest einer Klebstoff- und/oder Extrudatspur dauerhaft miteinander verbunden. Besonders bevorzugt ist hier eine Extrudatspur, wobei ein Extrudat ein unter Druck- und/oder Temperatureinfluss verflüssigtes, ursprünglich jedoch als festes Material vorliegendes Kunststoffmaterial ist, welches sich auf dem Packstoff wieder verfestigt hat, wobei es zwischen den sich überlappenden Randbereichen eine dauerhafte Verbindung geschaffen hat.

Als Kunststoffmaterial bietet sich auch hier ein Polyolefin, insbesondere Polypropylen, an. Bei der Verwendung von Polypropylen kann das komplette Packmittel aus sortenreinen Materialien bestehen.

Auf diese Weise ist eine kostengünstige schlauchförmige Umhüllung bereit gestellt, die nun in unterschiedlicher weiterer Ausgestaltung als Verpackung dienen kann.

In weiterer vorteilhafter Ausgestaltung ist vorgesehen, dass die Randbereiche mit zumindest zwei parallel zueinander verlaufenden Klebstoff- oder Extrudatspuren miteinander verbunden sind. Ins diesem Fall ist weiter vorgesehen, dass jede dieser Spuren zumindest eine Unterbrechung umfasst, wobei diese Unterbrechungen in Richtung des Längsnaht gesehen an unterschiedlichen Stellen angeordnet sind. Somit ist eine so genannte Labyrinth-Entlüftung bereitgestellt, über welche das Packmittel effektiv entlüftet werden kann, ohne dass Packgut entweichen kann. Dies gilt vor allem, wenn pulvriges oder staubiges Packgut, wie etwa Baustoffe oder pulverförmige Nahrungsmittel wie Mehl, verpackt werden. Insbesondere im Zusammenhang mit dem Vliesstoff, der in dem das Packmittel bildende Packstoff vorgesehen ist, ergeben sich überraschende Vorteile dieser Labyrinth-Entlüftung. Wenn eine einfache Überlappung gebildet ist, ist zwangsläufig zumindest eine Wandung dieser Labyrinth-Entlüftung durch eine Oberfläche gebildet, die einen Vliesstoff umfasst. Vliesstoff hat nun eine filternde Wirkung, d.h. es ist in der Lage, Fasern, Stäube und Pulver zu binden, so dass diese Bestandteile des Packgut weit besser zurückgehalten werden als in einem reinen Kunststoffpackmittel mit Labyrinth-Entlüftung.

In einer weiteren vorteilhaften Ausgestaltung der Erfindung ist vorgesehen, dass an dem wie vorstehend beschriebene Schlauchstück zwei Böden angeformt sind. Diese Böden sind vorteilhafterweise Kreuzböden.

Ein solcher Kreuzboden zeichnet sich dadurch aus, dass die beiden Lagen des Schlauchstücks zur Bildung eines Bodenrechtecks und zweier Dreieckstaschen auseinander gezogen sind und die beiden sich bildenden Laschen des Bodenrechtecks so zurückgefaltet sind, dass sich ihre beiden Randbereiche überlappen. Die äußeren Ecken der Dreieckstaschen sind dabei ebenfalls bereichsweise auf sich zurückgeschlagen, und auch die seitlichen Bereiche der Laschen überdecken die Dreieckstaschen. In dieser Konstellation können die sich überlappenden Bereich des Packstoffs jeweils miteinander verbunden sein. Vorteilhaft ist dabei, wenn diese miteinander versiegelt sind, d.h. durch Wärmebeziehungsweise Hitzezufuhr derart aufgeweicht wurden, dass sie nach einem Zusammenpressen und Erkalten stoffschlüssig miteinander verbunden sind.

In bevorzugter Ausführungsform der Erfindung ist zumindest ein Boden noch mit einem Deckblatt belegt, welches jede dieser vier soeben beschriebenen Komponenten eines Kreuzbodens zumindest teilweise überdeckt und mit ihnen verbunden ist. Als Verbindungsart ist hier ebenfalls eine Siegelung vorteilhaft. Vorteilhafterweise ist das Deckblatt vollflächig mit dem Boden verbunden, so dass, insbesondere wenn es beide Laschen und beide Dreieckstaschen teilweise bedeck, auf eine separate Verbindung der Dreieckstaschen mit den Laschen und der Verbindung der Laschen untereinander verzichtet werden kann. Diese bringt Vorteile bei der Herstellung, da diese kostengünstiger erfolgen kann.

Weitere Kostenvorteile kann es bringen, wenn das Deckblatt nicht aus dem erfindungsgemäßen Packstoff, sondern aus einem einfacheren, beispielsweise einschichtigen Packstoff gebildet ist. Vorteilhaft ist in diesem Zusammenhang wieder ein Vliesstoff, da dieser sich, wie bereits beschrieben, auf einfache Weise mittels Klebstoff, Extrudat oder einer Siegelung mit der äußeren Schicht des Packmittels, beispielsweise der Vliesstoffschicht, verbinden lässt. Jedoch ist es in diesem Falle bevorzugt, dass der Vliesstoff des Deckblatts ein höheres Flächengewicht aufweist als der Vliesstoff, der in einer Schicht des Packstoffs umfasst ist, um eine ausreichende Festigkeit bereitzustellen.

In einer weiteren vorteilhaften Ausgestaltung ist an einem oder dem Boden zumindest eine Füllöffnung, die bevorzugt als Ventil ausgestaltet ist, vorgesehen. Diese Füllöffnung ist eine rohrartige Öffnung, die zwischen einer der Dreieckstaschen und den beiden Laschen des Bodens vom Außenraum des Packmittels her den Innenraum des Packmittels zugänglich macht. Über diese Füllöffnung kann der sonst - bis auf die Entlüftungsöffnungen - in der Regel vollständig verschlossene Sack mit dem Packgut befüllt werden. Nach dem Befüllen kann sich die Öffnung oft unter Einfluss des Gewichts des Packguts verschließen, weshalb man häufig von einem Ventil spricht. Eine besonders gute Ventilwirkung erreicht man jedoch mit dem Einsatz eines separaten Ventilzettels, der schlauchförmig ausgebildet ist und in die oben beschriebene Füllöffnung eingesteckt und befestigt ist. Der Ventilzettel ist dabei in der Regel bereits an dem Bodendreieck und optional an Bereichen der beiden Laschen befestigt, bevor der Boden zugefaltet ist. Mit dem Zufalten des Bodens wird der Ventilzettel ebenfalls zusammengefaltet und bildet dann ein Schlauchstück. Alternativ könnte ein solches Schlauchstück bereits vorgefertigt an einem aufgezogenen Boden befestigt sein, was in einem Herstellungsprozess allerdings aufwändiger ist. Der Ventilzettel oder das Ventilschlauchstück ist dabei so dimensioniert, dass des in seiner Längsachse und vom Inneren des Packmittels gesehen weiter als das Bodendeckblatt reicht.

Der Ventilzettel kann das erfindungsgemäßen Packstoff umfassen oder vollständig hieraus bestehen, oder anderen Werkstoff, wie etwa eine Kunststofffolie, umfassen. Auch der Ventilzettel kann an den Bodenbestandteilen mit Klebstoff, Extrudat oder einer Siegelung befestigt sein.

Weitere Ausführungsbeispiele und Vorteile der Erfindung gehen aus der gegenständlichen Beschreibung hervor.

Die einzelnen Figuren zeigen:
- Fig. 1: Schichtaufbau eines Packstoffs eines erfindungsgemäßen Packmittels
- Fig. 2: Schichtaufbau eines weiteren Packstoffs eines erfindungsgemäßen Packmittels
- Fig. 3: ein zweites Ausführungsbeispiel eines Packmittels
- Fig. 4: ein sackförmiges Packmittel mit angeformten Böden
- Fig. 5: Prinzipskizze einer Schlauchbildung aus vlieshaltigem Material
- Fig. 6: Prinzipskizze zur Sackbildung aus einem Schlauch mit vlieshaltigem Material
- Fig. 7: Prinzipskizze eines Herstellungsverfahrens und -vorrichtung für einen erfindungsgemäßen Packstoff

Fig. 1 zeigt ein Ausführungsbeispiel eines erfindungsgemäßen Packstoffs 101, der aus zwei Schichten besteht. Generell ist in der vorliegenden Patentanmeldung als Schicht ein einzelner Werkstoff zu verstehen, wobei dieser insbesondere ein Flächengebilde oder in formloser Form vorliegen kann. Bei einem mehrschichtigen Packstoff sind diese einzelnen Werkstoffe jedoch dauerhaft, wenn auch nicht zwingend vollflächig miteinander verbunden.

Das gezeigte Ausführungsbeispiel eines Packstoffs 101 umfasst zwei Schichten, wobei die untere Schicht eine Papier oder Vliesstoff umfassende Schicht 102 und die obere ein Vliesstoff 103 ist. Diese beiden Schichten werden mit einem Verbindungsstoff 104 aneinander befestigt, wobei der Verbindungsstoff zumindest unmittelbar vor oder während der Verbindung formlos ist und auf die obere oder untere Schicht aufgetragen wird, wobei anschließend die jeweils andere Schicht aufgelegt und gegebenenfalls verpresst wird.

Weiterhin die Offnungen 105, 106 gezeigt, die in dem Packstoff 101 vorgesehen sind. Diese dienen der Entlüftung des Packguts und durchstoßen daher den Packstoff vollständig. Sie können mechanisch, beispielsweise mit Nadeln, aber auch mit anderen Verfahren eingebracht werden. Die Öffnungen können von der Unterseite (Öffnungen 105) und/oder von der Oberseite (Öffnungen 106) aus in den Packstoff eingebracht sein.

Im Falle einer Nadelperforation haben die Öffnungen häufig die gezeigte Kegelform (Öffnung 105a) oder eine kegelförmige Spitze, die sich in einem Zylinder fortsetzt (Öffnung 105b). Die zur Herstellung der Öffnungen herangezogenen Nadeln haben oft einen Durchmesser von mindestens 0,5mm, vorzugsweise von mindestens 1mm, so dass auch die Öffnungen diese Durchmesser haben. Die Durchmesser und auch die Einstichtiefen der Nadeln bei der Bearbeitung des Packstoffes sind so gewählt, dass zwar Luft austreten kann, das Packgut jedoch nicht hindurch gelangt, wobei eine ausreichende Entlüftungsleistung gewährleistet ist. Erfindungsgemäß sind zwischen 50 und 80 Entlüftungsöffnungen pro Quadratzentimeter vorgesehen, wobei jede einzelne Entlüftungsöffnung einen Durchmesser von maximal 0,8 mm aufweist. Hierbei wird der Entlüftungsvorgang verbessert, da sich die Luftströme vergleichmäßigen. Besondere Vorteile hat hier das Vorhandensein des Vliesstoffes, der in der Lage ist, Packgut zu binden, insbesondere, wenn es pulverförmig und/oder staubig ist.

Die Figur 2 zeigt einen Packstoff mit einer weiteren Schicht 123, welche zwischen der ersten und der zweiten Schicht eingebettet ist und die eine vorzugsweise Kunststofffolie umfasst. Im gezeigten Ausführungsbeispiel ist diese dritte Schicht 123 durch ein Verbindungsmittel 124 vollflächig mit der zweiten Schicht 102 und durch ein Verbindungsmittel 104 mit der ersten Schicht verbunden. Die erste Schicht 103, die zweite Schicht 102 und der Verbindungsstoff 104 sind im Vergleich mit der Figur 1 gleich.

Die Figur 3 zeigt ein Packmittel, das vorteilhafterweise einen Packstoff gemäß Figur 1 umfasst. Eine Bahn des Packstoffs 101 ist entlang zweier parallel verlaufender Längskanten 110 und 111 umgelegt, wobei eine untere Lage 112 gebildet ist. Die obere Lage 113 umfasst zwei Teile, welche jeweils von einem Seitenbereich 114 beziehungsweise 115 des Packstoffs gebildet ist, wobei die Randbereiche sich im Überlappungsbereich 116 überlappen. Damit bildet der Packstoff einen Schlauch, der später beispielsweise zu Schlauchstücken vereinzelt und mit Böden versehen werden kann. Jedoch kann auch eine andere Weiterverarbeitung vorgesehen sein.

Zur Befestigung der übereinander gelegten Randbereiche ist eine Klebstoff- oder Extrudatspur 117 vorgesehen. Eine Extrudatspur ist gegenüber anderen Fügeverfahren bevorzugt, da mit einem Extrudat, d.h. einem schmelzeförmigen Kunststoff, eine sehr haltbare Verbindung auch verschiedener Materialien erzeugt wird.

Im in Figur 3 gezeigten Ausführungsbeispiel ist der Packstoff derart gefaltet, dass der Vliesstoff 103 die Außenlage bildet, also der Umgebung zugewandt ist. Die zweite Schicht 102 ist dem Hohlraum, also dem Inneren des Packmittels zugeordnet. Demnach ist die Innenschicht aus der gereckten Folienbahn gebildet. Sonst entspricht die Schichtbildung dem in der Figur 1 gezeigtem Ausführungsbeispiel.

Diese Anordnung bietet verschiedene Vorteile. Insbesondere bei der Weiterverarbeitung des gezeigten Packmittels zu Säcken mittels Heißluftsiegelung wird die Heißluft nur auf äußere Schicht gegeben, hier also auf den Vliesstoff. Damit ist vermieden, dass die zweite Lage zu stark erwärmt wird. Darüber hinaus können Öffnungen, deren kegelstumpfartigen Verjüngungen nach außen zeigen, der Entlüftung in besonderer Weise dienlich sein, da bei pulvrigen und staubigen Packgütern das Packgut teilweise vom Vliesstoff aufgenommen werden kann. Schließlich kann ein Vliesstoff eine rutschhemmende Eigenschaft aufweisen. Bei übereinander gestapelten, befüllten Packmitteln verrutschen diese häufig gegeneinander, wenn sie beispielsweise aus reiner Kunststofffolie bestehen. Dieser Effekt dürfte bei einer ein Vliesstoff umfassenden äußeren Schicht nicht auftreten.

Das in der Figur 4 gezeigte Ausführungsbeispiel zeigt die Situation, bei der die Außenschicht durch die zweite Lage 102 gebildet ist, wogegen die Innenschicht durch den Vliesstoff gebildet ist. Der gezeigte Packstoff entspricht hinsichtlich der Formgebung im Wesentlichen der in der Figur 3 gezeigten Ausführungsform.

Eine Variante, die in diesem Ausführungsbeispiel gezeigt ist, betrifft die Verbindung der Randbereiche der Seitenbereiche 114 und 115. Die Extrudatspur 117 weist an einigen Stellen Unterbrechungen auf, von denen eine Unterbrechung 118 dargestellt ist. Parallel zur ersten Extrudatspur 117 ist eine weitere Extrudatspur 119 gezeigt, die ebenfalls Unterbrechungen umfasst. In Erstreckungsrichtung des Packstoffes gesehen liegen diese Unterbrechungen jedoch an anderen Stellen als die Unterbrechungen der Extrudatspur 117. Dies ist damit angedeutet, dass die zu sehende Stirnfläche der Extrudatspur 119 gegenüber dem Schnitt durch den Packstoff zurückspringt. Diese stellt die Unterbrechung 120 dar. Die Vorteile dieser Anordnung und Ausführung der Verbindung beider Randbereiche wurde bereits weiter oben erläutert.

Selbstverständlich sind die in den Figuren 3 und 4 gezeigten Ausführungsvarianten der Extrudatspuren auch in dem Packmittel der jeweils anderen Figur anwendbar.

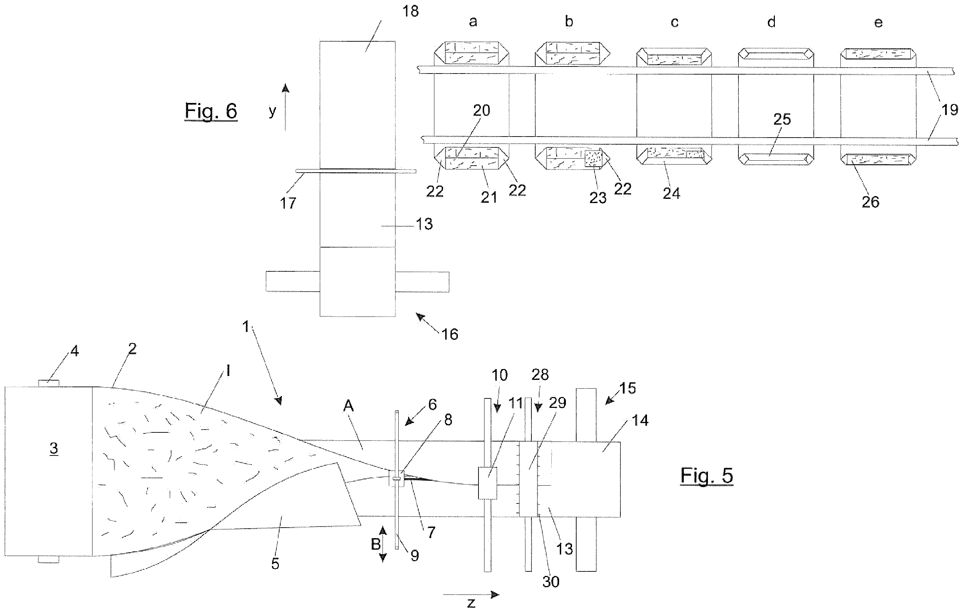

Fig. 5 zeigt eine Prinzipskizze zur Schlauchbildung aus einem vlieshaltigen Material. Diese Schlauchbildung erfolgt in einer Schlauchbildungsstation 1. Der Schlauchbildungsstation 1 wird ein Flachbahnmaterial 2 aus einem Packmittel, wie es vorstehend beschrieben ist und welches beispielsweise in den Figuren 1 und 2 gezeigt ist, zugeführt, welches in Form eines Wickels 3 bereitgestellt wird. Dieser Wickel 3 kann auf oder mit einem Wickelträger 4 rotieren, welcher beispielsweise im Maschinengestell der Schlauchbildungsstation oder im Gestell einer Abwickelstation gelagert ist.

Das Flachbahnmaterial 2 umfasst in der dargestellten Ausführungsform, auf die die vorliegende Erfindung jedoch nicht beschränkt ist, zwei Schichten. Die erste Schicht umfasst ein Kunststoffmaterial und wird, da diese Schicht nach der Schlauchbildung nach außen gerichtet ist, mit dem Buchstaben A gekennzeichnet. Die zweite Schicht, die nach der Schlauchbildung nach innen gerichtet ist, wird mit dem Buchstaben I gekennzeichnet. Die Schicht I kann dabei aus einem Vliesstoff bestehen. Dieses wird in der Figur 5 durch unregelmäßige und ungleichmäßige Striche verdeutlicht.

Das Flachbahnmaterial 2 wird von einer oder mehreren Vorzug- und/oder Vorschubeinrichtungen in Transportrichtung z transportiert. Vorzug- oder Vorschubeinrichtungen, die Transportwalzenpaaren umfassen können, sind in der Figur 1 nicht dargestellt. Nach dem Abwickeln wird zunächst eine Seite des Flachbahnmaterials 2 mittels eines Leitblechs 5 auf sich selbst umgeschlagen. Es können auch weitere Leitelemente zur zeitgleichen Bildung von Seitenfalten vorgesehen sein, welche allerdings nicht dargestellt sind.

Kurz nach dem Beginn des Umschlagens der ersten Seite des Flachbahnmaterials 2 wird auch dessen zweite Seite umgeschlagen. Beide Seiten werden soweit eingeschlagen, dass die Seitenränder anschließend aufeinander liegen. Das Umschlagen der zweiten Seite erfolgt wiederum mit einem Leitelement, das wie das Leitblech 5 ausgestaltet sein kann. Dieses Leitelement ist der Übersichtlichkeit halber nicht eingezeichnet.

Bevor sich die beiden Seitenränder berühren, wird der erste Seitenrand auf der Außenseite, die mit dem zweiten Seitenrand in Kontakt kommt, eine Behandlung vorgenommen, die dem Verbinden der beiden Seitenränder dient. In der Figur 5 ist daher eine Extrusionseinrichtung 6 dargestellt, mit welcher eine Kunststoffschmelze auf den Rand der ersten Seite als Extrudatspur 117 aufgetragen wird. Direkt anschließend wird die zweite Seite mit ihrer Innenseite auf die erste Seite aufgebracht. Hierbei wird eine Vliesschicht mit einer Kunststoffschicht verbunden, wobei die Kunststoffschmelze eine sehr feste Verbindung bewirkt. Das aufgetragene Extrudat 7 ist in der Figur 1 als dicke Linie dargestellt.

Die Extrusionseinrichtung 6 umfasst einen Extrusionskopf 8, dem über nicht gezeigte Zuführleitungen die Kunststoffschmelze zugeführt wird. Der Extrusionskopf 8 kann in Richtung des Doppelpfeils B quer zur Transportrichtung des Flachbahnmaterials 2 verschiebbar gelagert sein. Hierzu dient eine Traverse 9, die im Maschinengestell der Schlauchbildungsstation 1 befestigt sein kann. In einer weiteren Ausführungsform kann eine weitere, hier nicht gezeigte Extrusionsvorrichtung und/oder Extrusionskopf vorgesehen sein, um eine zweite, parallele Extrudatspur zu erzeugen, wie sie bereits im Zusammenhang mit der Figur 4 erläutert wurde. Zur Erzeugung unterbrochener Extrudatspuren kann jede Extrusionsvorrichtung mit zumindest einem Ventil der Extrudatfluss unterbrechbar sein.

Nach dem Auftragen des Extrudats und dem Aufbringen der zweiten Seite kann die Fügenaht mit einer Anpressvorrichtung 10 zusätzlich verpresst werden. Diese Anpressvorrichtung umfasst vorteilhafterweise eine Anpresswalze 11, welche Bestandteil eines Presswalzenpaares sein kann. Die Anpresswalze 11 ist über eine Achse oder Welle 12 relativ zum Maschinengestell rotierbar. Die Anpresswalze kann auch zur Kühlung der Fügenaht verwendet werden. Die Walze kann dazu so ausgestaltet sein, dass sie von einem Kühlmedium durchströmt werden kann. Bei Kontakt der Walze kann diese dann von der Fügenaht Wärme abführen, so dass die Fügenaht schneller eine ausreichende Haltbarkeit aufweist. Es sind jedoch auch weitere Kühlverfahren und - Vorrichtungen denkbar, wie zum Beispiel eine Einrichtung zum Aufblasen von Kühlluft.

Nach dem Verpressen der Fügenaht kann der so entstandene Schlauch 13 auf einen neuen Wickel 14 einer Wickelstation 15 aufgewickelt werden.

Zur Sicherstellung der späteren Entlüftung des Sacks während oder nach dessen Befüllung müssen Entlüftungsöffnungen vorgesehen sein. Hierzu ist eine Perforiereinrichtung 28 vorgesehen, welche eine Perforierwalze 29 umfassen kann, welche relativ zum Maschinengestell rotiert und auf ihrem Außenumfang Nadeln 30 tragen kann, welche in das Schlauchmaterial eindringen und so Entlüftungslöcher herstellen kann. Auch auf andere Arten, beispielsweise berührungslos, arbeitenden Perforiereinrichtung sind denkbar. Auch die Anordnung der Perforiereinrichtung ist nicht auf die gezeigte Anordnung beschränkt. Die Perforiereinrichtung kann auch vor der eigentlichen Schlauchbildungseinrichtung angeordnet sein. Auch eine Anordnung direkt vor der Trenneinrichtung ist denkbar. In jedem Fall muss die Perforation jedoch vor der Vereinzelung des Schlauches zu Schlauchstücken erfolgt sein.

In der Figur 6 sind nun die Verarbeitungsschritte zur Bildung von einzelnen Säcken aus dem Schlauch 13 dargestellt. Dieser Schlauch, der als Wickel 14 aus der Schlauchbildungsstation 1 in die Abwickelvorrichtung 16 transportiert wurde, wird mittels einer Trenneinrichtung 17, welche beispielsweise eine quer zur anfänglichen Transportrichtung y verschiebbare Schneidklinge umfasst, in einzelne Schlauchstücke 18 vereinzelt.

Anschließend wird die Transportrichtung der Schlauchstücke 18 verändert, so dass diese nun quer zu ihrer Erstreckungsrichtung, die in Richtung y zeigt, in Richtung z weiter transportiert werden. Hierzu ist eine Transportvorrichtung 19 vorgesehen, welche beispielsweise als Doppelriemenförderer ausgestaltet sein kann.

Im ersten Bearbeitungsschritt a zur Ausbildung der Sackböden, der in der Bodenaufziehstation erfolgt, werden die Schlauchstückenden zunächst aufgezogen. Dieser Schritt kann mithilfe von Saugern erfolgen, welche an den Enden die beiden Lagen etwas auseinander ziehen. Mit Spreizen können nun die Lagen in eine Ebene gebracht und ausgestrichen werden, wobei der Boden entlang der so genannten Bodenmittenlinie 20 umgeklappt wird. Die derart aufgezogenen Enden bilden nun ein Bodenrechteck 21 mit seitlichen Dreieckstaschen 22. In der Figur 2 sind nur die entsprechenden Elemente des unteren Endes des Schlauchstücks 18 mit Bezugszeichen versehen. Diese gelten sinngemäß jedoch auch für das andere Ende des Schlauchstücks. In der Figur ist erkennbar, dass bei den Dreieckstaschen die Kunststoffschicht nach außen zeigt, wogegen bei dem Bodenrechteck die Vliesschicht sichtbar ist.

Im Bearbeitungsschritt b kann nun ein Ventilzettel 23 auf ein offenes Ende des Schlauchstücks 18 aufgebracht und dort befestigt werden. Das Befestigen erfolgt vorteilhafterweise mittels Heißluftschweißen, wobei der Ventilzettel 23 zumindest an der Dreieckstasche 22 befestigt wird.

Im Bearbeitungsschritt c werden nun die äußeren Laschen 24 des Bodenrechts 21 soweit zurückgefaltet, dass die äußere Kante einer Lasche 24 über die Bodenmittenlinie 20 hinweg bewegt wird. Das Zurückfalten erfolgt dabei beispielsweise mit Leitelementen, wie beispielsweise mit Leitblechen. Die Bereiche der Dreieckstaschen, die bei diesem Vorgang ebenfalls mit zurück gefaltet werden, können miteinander verbunden werden. Anstelle der äußeren Laschen 24 können auch die inneren Laschen 25 zurück gefaltet werden.

Das Zurückfalten der inneren Laschen 25 erfolgt jedoch vorzugsweise im Verfahrensschritt d, wobei nun die innere Lasche 25 die äußere Lasche 24 in einem Überdeckungsbereich überdeckt. In diesem Überdeckungsbereich können beide Laschen miteinander verbunden werden, so dass bereits jetzt ein brauchbarer Sackboden entstanden ist. Da auch der Ventilzettel 23 eingeschlagen wurde, ist auf diese Weise ein Ventilschlauch entstanden, der die Befüllung des Sackes ermöglicht, aber einen Austritt des Befüllgutes nach dem Befüllen vermeidet.

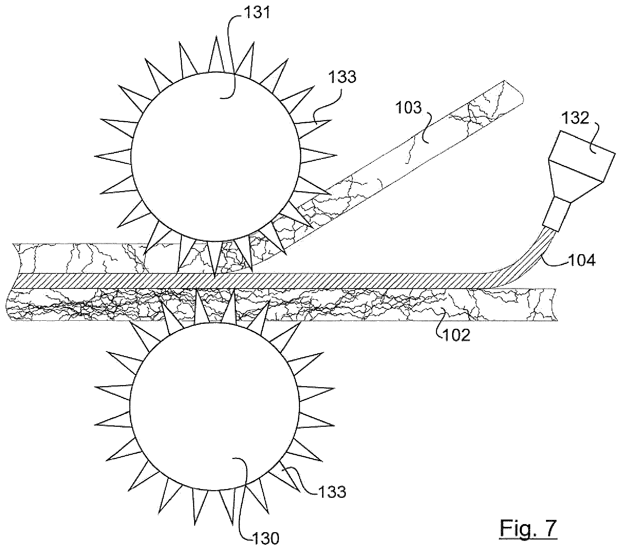

In einer besonders bevorzugten Ausführungsform der Erfindung erfolgt noch ein weiterer Bearbeitungsschritt e, bei dem auf die bereits geschlossenen Böden jeweils ein Bodendeckblatt 26 aufgetragen und vorzugsweise mit einem Heißluftschweißverfahren befestigt wird. Das Bodendeckblatt 26 ist dabei vorzugsweise so dimensioniert, dass es Bereiche der Laschen 24 und 25 sowie Bereiche der Dreieckstaschen 22 überdeckt. Es wird zudem mit seiner Kunststoffschicht auf den Boden gelegt, so dass die Kunststoffschichten einander zugewandt sind. Dies ermöglicht eine sehr haltbare Verbindung, welche durch Heißluftschweißen herstellbar ist. Im Bereich der Überdeckung der Laschen 24 und 25 kann die Lasche 25 mit Ausstanzungen versehen sein, so dass das Bodendeckblatt 25 auch im Bereich dieser Überdeckung einen direkten Kontakt zu der Lasche 24 hat. Auf ähnliche Weise kann ein direkter Kontakt des Bodendeckblatts 26 mit dem Ventilzettel 23 hergestellt werden. Die Figur 7 zeigt eine Vorrichtung und ein Verfahren zur Herstellung eines Packstoffes zur Verwendung in einem erfindungsgemäßen Packmittel, wie es in den Figuren 5 und 6 dargestellt ist. Mit einer nicht gezeigten Transportvorrichtung wird die zweite Schicht 102 zugeführt und durch den Walzenspalt zwischen der unteren Walzen 130 und der oberen Walzen 131 hindurch geführt. Bevor diese zweite Schicht 102 zu diesem Punkt gelangt, wird sich durch eine stromaufwärts angeordnete Düse 132, einer nicht gezeigten Kunststoffextrusionsvorrichtung zugeordnet ist, mit einem Belag bestehend aus einer Kunststoffschmelze versehen, die den Verbindungsstoff 104 darstellt. Weiterhin wird dem Walzenspalt über nicht gezeigte Zuführeinrichtungen wie etwa einer Anzahl an Leitwalzen die erste Schicht 103 zugeführt.

Alle drei Komponenten (erste Schicht, zweite Schicht, Verbindungsstoff) kommen also im Walzenspalt zusammen und werden dort verpresst. Der Verbindungsstoff kann an dieser Stelle bereits erkaltet sein. Die Walzen können temperiert, insbesondere beheizt sein. Weiterhin können die Oberflächen der Walzen 130, 131 mit kegelartigen Erhebungen 133 versehen sein, die in die erste Schicht 103 und in die zweite Schicht 102 eindringen oder diese sogar durchdringen. Durch diese Maßnahme wird die Vernetzung der in einer Schicht enthaltenen Fasern untereinander und auch der Fasern mit dem Verbindungsmitteln unterstützt, so dass ein Packstoff mit erhöhter Festigkeit entsteht.

Anstelle von Walzen 130, 131 mit kegelartigen Erhebungen können auch Glattwalzen eingesetzt werden, bei welchen der relative Abstand zueinander und damit der Anpressdruck eingestellt werden könnte.

In einer weiteren Alternative könnten auch eine oder zwei Vakuumwalzen vorgesehen sein. Dabei ist oder sind die Walzenoberflächen mit Löchern versehen, die mit einem Unterdruck beaufschlagbar sind. Mit solchen Walzen ist der Verbindungsstoff, falls er eine niedrige Viskosität aufweist, in die Poren des Vliesstoffes, die bei seiner Herstellung entstehen, in einem gewissen Maße verschließbar. Die Luftdurchlässigkeit und in einem gewissen Rahmen auch die Feuchtigkeitsbarriere des Vliesstoffes ist damit nachträglich beeinflussbar bzw. einstellbar.

| **Bezugszeichenliste** | |
|---|---|
| 1 | Schlauchbildungsstation |
| 2 | Flachbahnmaterial |
| 3 | Wickel |
| 4 | Wickel träger |
| 5 | Leitblech |
| 6 | Extrusionseinrichtung |
| 7 | Extrudat |
| 8 | Extrusionskopf |
| 9 | Traverse |
| 10 | Anpressvorrichtung |
| 11 | Anpresswalze |
| 12 | Achse oder Welle |
| 13 | Schlauch |
| 14 | Wickel |
| 15 | Wickelstation |
| 16 | Abwickelvorrichtung |
| 17 | Trenneinrichtung |
| 18 | Schlauchstück |
| 19 | Transportvorrichtung |
| 20 | Bodenmittenlinie |
| 21 | Bodenrechteck |
| 22 | Dreieckstaschen |
| 23 | Ventilzettel |
| 24 | äußere Lasche |
| 25 | innere Lasche |
| 26 | Bodendeckblatt |
| 27 | Umlenkeinrichtung |
| 28 | Perforiereinrichtung |
| 29 | Perforierwalze |
| 30 | Nadeln |
| 101 | Packstoff |
| 102 | ein faserhaltiges Material umfassende Schicht |
| 103 | Vl iesstoff |
| 104 | Verbindungsstoff |
| 105 | Öffnung |
| 105a | Öffnung Kegelform |
| 105b | Öffnung mit kegelförmiger Spitze |
| 106 | Öffnung |
| 110 | Längskante |
| 111 | Längskante |
| 112 | Untere Lage |
| 113 | Obere Lage |
| 114 | Seitenbereich des Packstoffs |
| 115 | Seitenbereich des Packstoffs |
| 116 | Überlappungsbereich |
| 117 | Klebstoff-/Extrudatspur |
| 118 | Unterbrechung der Extrudatspur |
| 119 | Extrudatspur |
| 120 | Unterbrechung |
| 123 | Dritte Schicht, Kunststofffolie |
| 124 | Verbindungsmittel |
| 130 | untere Walze |
| 131 | obere Walze |
| 132 | Düse |
| 133 | kegelartige Erhebungen |
| | |
| | |
| A | Außenseite des Flachbahnmaterials 2 |
| I | Innenseite des Flachbahnmaterials 2 |
| a | erster Bearbeitungsschritt |
| b | zweiter Bearbeitungsschritt |
| c | dritter Bearbeitungsschritt |
| d | vierter Bearbeitungsschritt |
| e | fünfter Bearbeitungsschritt |
| f | Stapelung von Säcken |
| y | anfängliche Transportrichtung des Schlauchstücks |
| z | Transportrichtung des Flachbahnmaterials 2 bzw. des Schlauches |
| B | Doppelpfeil |
| C | Doppelpfeil |

## Patentansprüche

1. Sackförmiges Packmittel,
welches einen Packstoff umfasst, der zumindest zweilagig angeordnet ist, wobei der Packstoff zumindest zwei Schichten umfasst, wobei eine erste Schicht Vliesstoff umfasst,
wobei die zweite Schicht ein faserhaltiges Material umfasst,
wobei das faserhaltige Material Vliesstoff oder Papier umfasst und wobei die erste und die zweite Schicht mittels eines Verbindungsstoffes verbunden sind,
**dadurch gekennzeichnet,**
**dass** der Packstoff Entlüftungsöffnungen umfasst, wobei 50 bis 80 Entlüftungsöffnungen pro Quadratzentimeter vorgesehen sind und wobei die Entlüftungsöffnungen einen Durchmesser von maximal 0,8 mm aufweisen.

2. Packmittel nach einem der vorstehenden Anspruch,
**dadurch gekennzeichnet, dass**
der Verbindungsstoff ein Polyolefin, insbesondere Polypropylen oder Polyethylen, ist.

3. Packmittel nach einem der vorstehenden Ansprüche,
**dadurch gekennzeichnet, dass**
zumindest eine Längsnaht vorgesehen ist, bei welcher mit zumindest einer Klebstoff- oder Extrudatspur zwei übereinander gelegte Randbereiche des Packstoffs miteinander verbunden sind.

4. Packmittel nach dem vorstehenden Anspruch,
**dadurch gekennzeichnet, dass**
in der Längsnaht zwei parallel verlaufende Klebstoff- oder Extrudatspuren vorgesehen sind, wobei jede dieser Spuren Unterbrechungen umfasst, wobei diese Unterbrechungen in Richtung der Längsnaht gesehen an unterschiedlichen Stellen angeordnet sind.

5. Packmittel nach einem der beiden vorstehenden Ansprüche,
**dadurch gekennzeichnet, dass**
zwei angeformte Böden, vorzugsweise Kreuzböden, vorgesehen sind.

6. Packmittel nach dem vorstehenden Anspruch,
**dadurch gekennzeichnet, dass**
im Bereich eines angeformten Bodens eine Füllöffnung, vorzugsweise ein Ventil, vorgesehen ist.

7. Packmittel nach einem der beiden vorstehenden Ansprüche,
**dadurch gekennzeichnet, dass**
zur Bildung eines Boden Bestandteile des Packstoffs miteinander versiegelt sind.

8. Packmittel nach einem der drei vorstehenden Ansprüche,
**dadurch gekennzeichnet, dass**
der zumindest ein Boden durch wenigstens zwei sich überlappende Bestandteile des Packstoffes gebildet sind, wobei die Überlappung mit einem Deckblatt bedeckt ist, wobei das Deckblatt mit beiden Bestandteilen mittels einer festen Verbindung verbunden ist.

9. Packmittel nach dem vorstehenden Anspruch,
**dadurch gekennzeichnet, dass**
die Verbindung aus per Heißluft angeschmolzenen und in Kontakt gebrachten Bereichen des Packstoffes besteht.

10. Verfahren zur Herstellung eines Packmittels nach einem der vorstehenden Ansprüche,
**gekennzeichnet durch**
die folgenden Verfahrensschritte:
Bereitstellen eines Flachbahnmaterials, welches zumindest zum Teil ein Kunststoffvliesmaterial umfasst, wobei das Flachbahnmaterial zumindest zwei Schichten umfasst, wobei eine erste Schicht Vliesstoff und eine zweite Schicht Vliesstoff oder Papier umfasst und wobei die erste und die zweite Schicht mittels eines Verbindungsstoffes verbunden sind,
- Bilden eines Schlauches aus dem Flachbahnmaterial, wobei die Seitenbereiche des Flachbahnmaterials unter Ausbildung einer Überlappung aufeinander gelegt und miteinander verbunden werden, so dass der Schlauch zwei Materiallagen umfasst,
- Vereinzeln des Schlauches zu Schlauchstücken und
- Anformen eines Bodens an zumindest einem Ende eines Schlauchstücks
- Einbringen von Entlüftungsöffnungen, wobei 50 bis 80 Entlüftungsöffnungen pro Quadratzentimeter vorgesehen sind und wobei die Entlüftungsöffnungen einen Durchmesser von maximal 0,8 mm aufweisen.

## Claims

1. A sack-shaped packaging means, which comprises a packing material, which is arranged in at least two layers, wherein a first layer comprises non-woven fabric, wherein the second layer comprises a fiber-containing material, wherein the fiber-containing material composes non-woven fabric or paper and wherein the first and the second layer are connected by means of a connecting material,
**characterized in that** the packaging material comprises ventilation openings, wherein 50 to 80 ventilation openings are provided per square centimeter and wherein the ventilation openings have a diameter of maximally 0.8 mm.

2. The packaging means according to the preceding claim,
**characterized in that**
the connecting material is a polyolefin, in particular, polypropylene or polyethylene.

3. The packaging means according to any one of the preceding claims,
**characterized in that**
at least one longitudinal seam is provided, in which two superimposed edge regions of the packaging material are connected to one another with at least one adhesive- or extrudate track.

4. The packaging means according to the preceding claim,
**characterized in that**
two adhesive- or extrudate tracks running in parallel are provided in the longitudinal seam, wherein each of these tracks comprises interruptions, wherein said interruptions, when viewed in the direction of the longitudinal seam, are arranged at different locations.

5. The packaging means according to any one of the two preceding claims,
**characterized in that**
two integrally formed bottoms, preferably cross bottoms, are provided.

6. The packaging means according to the preceding claim,
**characterized in that**
in the region of an integrally formed bottom a filling opening, preferably a valve, is provided.

7. The packaging means according to any one of the two preceding claims,
**characterized in that**
components of the packaging material are sealed in order to form a bottom.

8. The packaging means according to any one of the three preceding claims,
**characterized in that**
the at least one bottom is formed by the at least two overlapping components of the packaging material, wherein the overlap is covered with a cover sheep, wherein the cover sheet is connected to both components by means of a fixed connection.

9. The packaging means according to the preceding claim,
**characterized in that**
the connection consists of regions of the packaging material which have been melted by hot air and brought into contact.

10. A method for producing a packaging means according to any one of the preceding claims,
**characterized by**
the following method steps:
Providing a flat web material, which comprises at least partially a plastic non-woven material, wherein the flat web material comprises at least two layers, wherein a first layer comprises non-woven fabric and a second layer comprises non-woven fabric or paper and wherein the first and the second layer are connected by means of a connecting material,
- forming a hose made of the flat web material, wherein the side areas of the flat web material are placed on top of one another with the formation of an overlap and are connected to one another, so that the hose comprises two material layers,
- separating the hose into hose pieces and
- integrally forming a bottom on at least one end of a hose piece,
- introducing ventilation openings, wherein 50 to 80 ventilation openings are provided per square centimeter and wherein the ventilation openings have a diameter of maximally 0.8 mm.

## Revendications

1. Moyen d'emballage en forme de sac,
lequel comprend un matériau d'emballage qui est disposé au moins en deux nappes, le matériau d'emballage comprenant au moins deux couches, une première couche comprenant un non-tissé,
la deuxième couche comprenant un matériau fibreux,
le matériau fibreux comprenant un non-tissé ou du papier, et
la première et la deuxième couche étant raccordées au moyen d'un matériau de raccordement,
**caractérisé en ce que**
le matériau d'emballage comprend des orifices de ventilation, 50 à 80 orifices de ventilation par centimètre carré étant prévus, et les orifices de ventilation présentant un diamètre de 0,8 mm maximum.

2. Moyen d'emballage selon la revendication précédente,
**caractérisé en ce que**
le matériau de raccordement est une polyoléfine, en particulier du polypropylène ou du polyéthylène.

3. Moyen d'emballage selon l'une des revendications précédentes,
**caractérisé en ce**
**qu'**il est prévu au moins une couture longitudinale au niveau de laquelle deux zones marginales superposées du matériau d'emballage sont raccordées l'une à l'autre avec au moins une piste de colle ou d'extrudat.

4. Moyen d'emballage selon la revendication précédente,
**caractérisé en ce que**,
dans la couture longitudinale, il est prévu deux pistes de colle ou d'extrudat parallèles entre elles, chacune de ces pistes comprenant des interruptions, ces interruptions étant disposées en différents endroits vu en direction de la couture longitudinale.

5. Moyen d'emballage selon l'une des deux revendications précédentes,
**caractérisé en ce**
**qu'**il est prévu deux fonds formés, de préférence des fonds croisés.

6. Moyen d'emballage selon la revendication précédente,
**caractérisé en ce**
**qu'**il est prévu un orifice de remplissage, de préférence une vanne, dans la zone d'un fond formé.

7. Moyen d'emballage selon l'une des deux revendications précédentes,
**caractérisé en ce que**
des composants du matériau d'emballage sont scellés l'un à l'autre pour la formation d'un fond.

8. Moyen d'emballage selon l'une des trois revendications précédentes,
**caractérisé en ce que**
l'au moins un fond est formé par au moins deux composants du matériau d'emballage qui se chevauchent, le chevauchement étant couvert par une feuille de couverture, la feuille de couverture étant raccordée aux deux composants au moyen d'un raccordement fixe.

9. Moyen d'emballage selon la revendication précédente,
**caractérisé en ce que**
le raccordement se compose de zones du matériau d'emballage qui sont fondues par de l'air chaud et qui sont mises en contact.

10. Procédé de fabrication d'un moyen d'emballage selon l'une des revendications précédentes,
**caractérisé par**
les étapes de procédé suivantes :
fourniture d'un matériau en bande plate qui comprend au moins en partie un matériau non-tissé synthétique, le matériau en bande plane comprenant au moins deux couches, une première couche comprenant un non-tissé, et une deuxième couche comprenant un non-tissé ou du papier, et la première et la deuxième couche étant raccordées au moyen d'un matériau de raccordement,
- formation d'un tuyau en matériau en bande plane, les zones latérales du matériau en bande plane étant superposées avec constitution d'un chevauchement et étant raccordées l'une à l'autre de telle sorte que le tuyau comprend deux nappes de matériau,
- séparation du tuyau en tronçons de tuyau, et
- formation d'un fond à au moins une extrémité d'un tronçon de tuyau,
- mise en place d'orifices de ventilation, 50 à 80 orifices de ventilation par centimètre carré étant prévus, et les orifices de ventilation présentant un diamètre de 0,8 mm maximum.
